# EUROPEAN PATENT APPLICATION

(11) **EP 4 550 728 A1**
(43) Date of publication of application: **07.05.2025**
(21) Application number: 23206604.3
(22) Date of filing: 30.10.2023
(51) Int. Cl.: H04L 12/46, H04L 12/40

(54) **INPUT/OUTPUT (I/O) STATION INCLUDING ADVANCED PHYSICAL LAYER (APL) I/O MODULE**

(71) Applicant: ABB SCHWEIZ AG, 5400 Baden (CH)
(72) Inventor: KEUL, Thomas, 63579 FREIGERICHT (DE); NORBERG, Robert, 632 23 Eskilstuna (SE); JESKE, Ralf, 32469 PETERSHAGEN (DE); POOK, Stefan, 32423 Minden (DE)
(74) Representative: Kransell & Wennborg KB

(57) **Abstract**

The present disclosure relates to an I/O station (10) for signalling between a network (3) and a plurality of field devices (21) in an automation system (1). The I/O station comprises an I/O network interface (11), and a plurality of I/O modules (12), each providing one or more I/O channels (20) connecting respective one or more field device(s) of the plurality of field devices, whereby each of the field devices is communicatively connected to the network via the I/O module and the network interface. At least one of the I/O modules is an APL I/O module (12b) connecting APL field device(s) (21b) of the plurality of field devices, and at least one of the I/O modules is a non-APL I/O module (12a) connecting non-APL field device(s) (21a) of the plurality of field devices. The I/O station is configured for tunnelling data between at least one of the I/O modules and the network.

## Description

### TECHNICAL FIELD

The present disclosure relates to an input-output (I/O) station comprising an Advanced Physical Layer (APL) I/O module.

### BACKGROUND

An I/O station, also called I/O system, is used in an industrial automation system for connecting field devices, such as sensors, actuators or the like in an industrial plant to controllers of the plant. The I/O station typically comprises a Fieldbus Communication Interface (FCI) and I/O modules connecting the field devices, where the FCI interface is arranged for forwarding data between the modules and the controllers, via fieldbus or fieldbus network. Since the controllers are digital while at least some of the field devices may be analog legacy devices (e.g. requiring a 4-20 mA signal), the I/O station may convert analogue signals to digital and *vice versa.* Each of the I/O modules may be any of a digital-in (DI) module, digital-out (DO) module, analog-in (AI) module or analog-out (AO) module, or a combination thereof.

To handle both analog devices and APL devices, the I/O station typically has two separate physical layers, where APL switches and an APL physical layer are used for the APL devices.

### SUMMARY

It is an objective of the present invention to provide an alternative way for an I/O station to connect both analog and APL field devices.

According to an aspect of the present invention, there is provided an I/O station for signalling between a network and a plurality of field devices in an automation system. The I/O station comprises an I/O network interface, and a plurality of I/O modules, each providing one or more I/O channels connecting respective one or more field device(s) of the plurality of field devices, whereby each of the field devices is communicatively connected to the network via the I/O module and the network interface. At least one of the I/O modules is an APL I/O module connecting APL field device(s) of the plurality of field devices, and at least one of the I/O modules is a non-APL I/O module connecting non-APL field device(s) of the plurality of field devices. The I/O station is configured for tunnelling data between at least one of the I/O modules and the network.

According to another aspect of the present invention, there is provided an automation system comprising a plurality of controllers, a plurality of the I/O station of the present disclosure, and the network via which the I/O stations are communicatively connected to the controllers.

According to another aspect of the present invention, there is provided a method of tunnelling data between an I/O module, e.g. an APL I/O module, and the network in an embodiment of the I/O station of the present disclosure. The method comprises sending a first payload from the I/O module to the network including encapsulating the payload in the I/O module and de-encapsulating the payload in the network interface, and sending a second payload from the network to the I/O module including encapsulating the payload in the network interface and de-encapsulating the payload in the I/O module.

According to another aspect of the present invention, there is provided a computer program product comprising computer-executable components for causing an I/O station to perform an embodiment of the method of the present disclosure when the computer-executable components are run on processing circuitry comprised in the I/O station.

By the I/O station being able to tunnel data between the network and the APL or non-APL modules, there is no need for separate APL and non-APL communication channels, e.g. I/O buses, in the I/O station.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of an automation system, in accordance with some embodiments of the present invention.
Fig 2 is a schematic block diagram of an I/O station, in accordance with some embodiments of the present invention.
Fig 3 is another schematic block diagram of an I/O station, in accordance with some embodiments of the present invention.
Fig 4 is a schematic flow chart of some embodiments of the method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

That two devices are said to be "communicatively connected" herein imply that they are connected such that they are able to communicate with each other, e.g. wirelessly or non-wirelessly. In the following, tunnelling of data to and from an APL I/O module is discussed, which may be the most common case, but it is equally possible to instead tunnel data to and from a non-APL I/O module via an APL physical layer e.g. I/O bus.

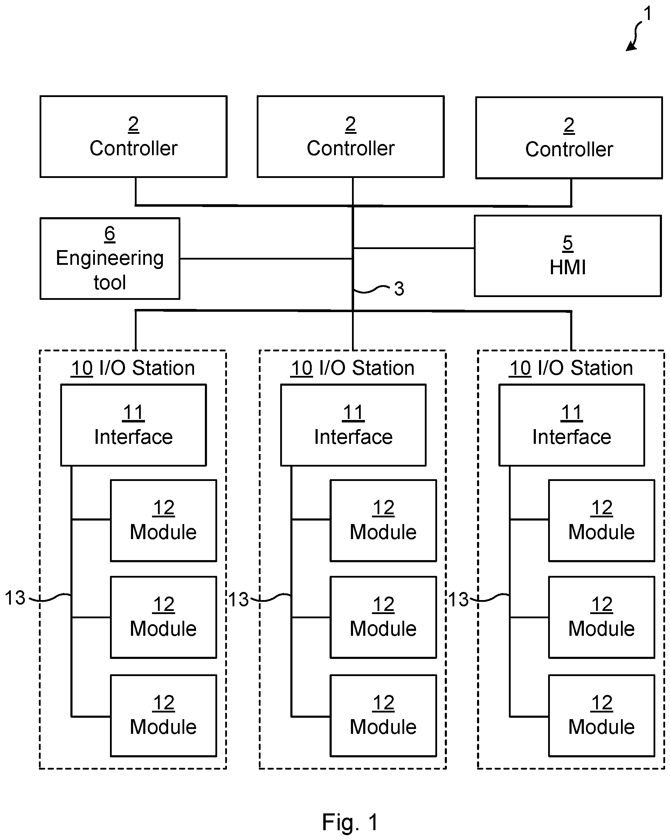

Figure 1 illustrates an automation system 1 comprising a plurality of I/O stations 10. An I/O station may be embedded hardware and software that, for inputs converts the physical signal from the process running in the plant (either directly from the process or via a field device) to digital values, and for outputs converts digital values into physical signals for the process (either directly to the process or via a field device). However, for APL field devices, as discussed herein, such conversion may not be needed, why signalling to and from APL field devices can be tunnelled through the I/O station in accordance with the present disclosure. The I/O stations 10 are connected with a plurality of network devices via a network 3. The network may comprise one or more fieldbus(es). The network may comprise or consist of an Ethernet physical layer e.g. of copper wire and/or optical fibre, and/or wireless. The network 3 may be configured for communication in accordance with an OPC Unified Architecture (OPC UA), Profmet or Modbus TCP communication protocol, preferably OPC UA.

The network devices may comprise any of one or more, e.g. a plurality of, controller(s) 2, one or more, e.g. only one, Human-Machine Interface(s) (HMI) 5 and/or one or more, e.g. only one, engineering tool(s) 6. A controller 2 may be embedded hardware and software that executes a real-time plant process specific application that e.g. reads signals from the I/O stations 10, writes signals to the I/O stations 10 and/or receives commands from an HMI 5. Additionally or alternatively, the controller can be an embedded standalone controller or a controller software running in a container as part of a larger computing unit or running in the cloud connected with an edge device. An HMI 5 may convene to an operator the status of the process based on reading data from the controller(s) 2 and/or the I/O stations 10. The HMI 5 may additionally command a controller 2 to start an action. An engineering tool 6 may configure the binding and conversion of I/O channels of an I/O station 10 and/or the application in a controller 2. The engineering tool 6 may execute on a PC where activities are not time critical.

In the example of figure 1, there are three I/O stations 10 and three controllers 2. However, there need not be a one-to-one relationship between the number of I/O stations and the number of controllers and any one of the controllers may connect with any of the I/O channels in any of the I/O stations. In some embodiments, at least one of the network devices 2, 5 and/or 6, e.g. at least one controller 2, may be communicatively connected (i.e. connected such that it is able to communicate, e.g. wirelessly or non-wirelessly) with I/O channels of at least two of the I/O stations 10.

In the example of figure 1, the controllers 2 are connected between the I/O stations 10 and the HMI 5. For example, the HMI 5 may be connected directly to the stations 10, without being connected via a controller. However, other topologies are possible. The engineering tool 6 may be connected to any or all of the I/O stations 10, and/or to any of the controllers 2, e.g. via the network 3. Typically, the engineering tool 6 is only connected when needed, but in some embodiments it may be permanently connected.

Each of the I/O stations 10 comprises a plurality of I/O modules 12 which are interfaced with the network 3 via an I/O network interface 11. The modules 12 may be connected to the network interface 11 via one or more I/O bus(es) 13 within the station 10, and/or there may be point-to-point connections between the modules 12 and network interface 11. Though only one I/O bus 13 may be needed within a station 10, it may be advantageous to use two or more buses 13 for increased bandwidth and/or redundancy.

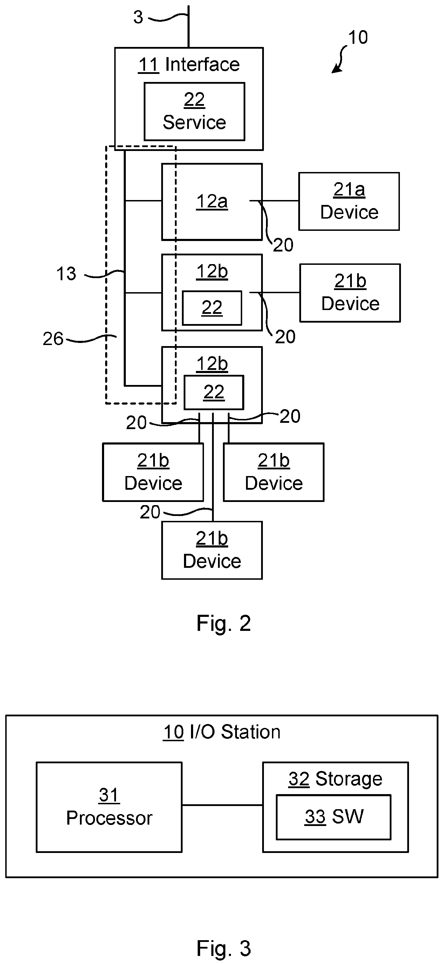

Figure 2 illustrates an I/O station 10, e.g. one of the stations 10 in figure 1, connecting a plurality of field devices 21. Each module 12 provides one or more I/O channel(s) 20, where each channel 20 can connect a respective field device 21 (i.e. one device per channel and one channel per device). In an example, one of the modules 12 provides only one channel 20 and may thus be able to connect only one field device 21. In another example, one of the modules 12 provides 16 channels 20, enabling the module to connect up to 16 field devices 21. There maybe unused channels 20 (i.e. channels to which no field device is connected), but each of the channels 20 which connects a field device 21 is communicatively connected to at least one of the network devices, e.g. one or more controllers 2, via the network interface 11 and the network 3.

In accordance with some embodiments of the present invention, at least one of the I/O modules 12 is an APL I/O module 12b configured for connecting one or more (depending on the number of channels 20 it provides) APL field device(s) 21b, and at least one of the I/O modules 12 is a non-APL I/O module 12a configured for connecting one or more (depending on the number of channels 20 it provides) non-APL, e.g. analog, field device(s) 21a. In some embodiments of the present invention, at least one of the APL I/O module(s) 12b is configured for connecting Ethernet-based APL field device(s) 21b.

In accordance with some embodiments of the present invention, the I/O station 10 is configured for tunnelling data between each of the at least one APL module 12b and the network 3, i.e. for tunnelling data from the network, typically any of the network devices, to the APL module and/or for tunnelling data from the APL module to the network, typically any of the network devices. The data may be any communication object, typically comprised in one or more payload(s) sent between the network and the APL module. The tunnelling is typically achieved by encapsulation of the APL payload, i.e. adding a header and/or tailer compatible with the communication protocol used within the I/O station 10, e.g. for communication via an I/O bus 13. Thus, in some embodiments of the present invention, the tunnelling includes tunnelling through an I/O bus 13 comprised in the I/O station 10. The same I/O bus 13 may be used for communication between the network 3 and at least one non-APL I/O module 12a. Thus, in some embodiments of the present invention, the I/O station 10 is also configured for sending data between each of the at least one non-APL I/O module 12a and the network 3 via said I/O bus 13. In some embodiments of the present invention, the APL payload which is tunnelled is configured in accordance with a fieldbus communication protocol, e.g. OPC UA.

In some embodiments of the present invention, each of the at least one APL I/O module 12b comprises a tunnelling service 22 for encapsulating payloads from the APL I/O module and for de-encapsulating payloads to the APL I/O module. The payloads including the data which is tunnelled between the network and the APL module.

Additionally or alternatively, preferably additionally, in some embodiments of the present invention, the network interface 11 comprises a tunnelling service 22 for encapsulating payloads to the APL I/O module 12b and for de-encapsulating payloads from the APL I/O module.

The modules 12 and/or the network interface 11 may be mechanically connected to one or more baseplate(s) 26 within the station 10. In some embodiment a single baseplate 26 provides slots for mechanically connecting the modules 12 and the network interface 11. In other embodiments that functionality is provided by a plurality of modular baseplates 26, one of which providing a slot for mechanically connecting the network interface 11.

Figure 3 is another illustration of an I/O station 10, e.g. as discussed in relation to figure 2. The I/O station 10 comprises processing circuitry 31 e.g. a central processing unit (CPU). The processing circuitry 31 may comprise one or a plurality of processing units in the form of microprocessor(s). However, other suitable devices with computing capabilities could be comprised in the processing circuitry 31, e.g. an application specific integrated circuit (ASIC), a field programmable gate array (FPGA) or a complex programmable logic device (CPLD). The processing circuitry 31 is configured to run one or several computer program(s) or software (SW) 33 stored in a storage 32 of one or several storage unit(s) e.g. a memory. The storage unit is regarded as a computer readable means, forming a computer program product together with the SW 13 stored thereon as computer-executable components, and may e.g. be in the form of a Random Access Memory (RAM), a Flash memory or other solid state memory, or a hard disk, or be a combination thereof. The processing circuitry 31 may also be configured to store data in the storage 32, as needed. In some embodiments, the processing circuitry 31 is comprised in the network interface 11. In some embodiments, processing circuitry 31 is comprised in the baseplate 26, e.g. in a baseplate mechanically connecting the network interface 11. In some embodiments, the storage 32 is comprised in the network interface 11. In some embodiments, the storage 32 is comprised in the baseplate 26, e.g. in a baseplate mechanically connecting the network interface 11.

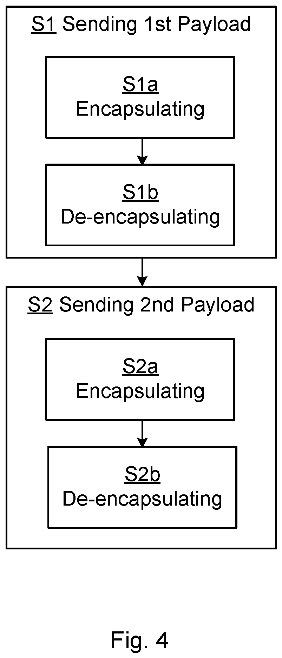

Figure 4 illustrates some embodiments of the method of the present invention. The method is for tunnelling data in an I/O station 10 between an I/O module 12 and the network 3. The I/O module may be either an APL I/O module 12b or a non-APL I/O module 12a, preferably an APL I/O module. The method comprises sending S1 a first payload from the I/O module 12 to the network 3 including encapsulating S1a the payload in the I/O module and de-encapsulating S1b the payload in the network interface 11. The method also comprises sending S2 a second payload from the network 3 to the I/O module 12 including encapsulating S2a the payload in the network interface 11 and de-encapsulating S2b the payload in the I/O module.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. An I/O station (10) for signalling between a network (3) and a plurality of field devices (21) in an automation system (1), the I/O station comprising:
an I/O network interface (11); and
a plurality of I/O modules (12), each providing one or more I/O channels (20) connecting respective one or more field device(s) (21) of the plurality of field devices, whereby each of the field devices is communicatively connected to the network (3) via the I/O module (12) and the network interface (11);
wherein at least one of the I/O modules (12) is an APL I/O module (12b) connecting Advanced Physical Layer, APL, field device(s) (21b) of the plurality of field devices (21), and at least one of the I/O modules (12) is a non-APL I/O module (12a) connecting non-APL field device(s) (21a) of the plurality of field devices (21); and
wherein the I/O station (10) is configured for tunnelling data between at least one of the I/O modules (12) and the network (3).

2. The I/O station of claim 1, wherein each of the at least one of the I/O modules (12) comprises a tunnelling service (22) for encapsulating payloads from the said I/O module and for de-encapsulating payloads to said I/O module.

3. The I/O station of any preceding claim, wherein the network interface (11) comprises a tunnelling service (22) for encapsulating payloads to each of the at least one I/O module (12) and for de-encapsulating payloads from said I/O module(s).

4. The I/O station of any preceding claim, wherein the tunnelling includes tunnelling through an I/O bus (13) comprised in the I/O station (10).

5. The I/O station of claim 4, wherein the I/O station (10) is configured for sending data between each of the I/O modules (12) and the network (3) via said I/O bus (13).

6. The I/O station of any preceding claim, wherein the at least one of the I/O modules (12) is each of the at least one APL module (12b).

7. The I/O station of claim 6, wherein the tunnelling comprises tunnelling a payload configured in accordance with a fieldbus communication protocol, e.g. OPC Unified Architecture, OPC UA.

8. The I/O station of any preceding claim, wherein the APL I/O module (12b) is configured for connecting Ethernet-based APL field devices (21b).

9. The I/O station of any preceding claim, wherein the at least one of the I/O modules (12) is each of the at least one non-APL module (12a).

10. An automation system (1) comprising:
a plurality of controllers (2);
a plurality of the I/O station (10) of any preceding claim; and
the network (3) via which the I/O stations (10) are communicatively connected to the controllers (2).

11. A method of tunnelling data between an I/O module (12), e.g. an APL I/O module (12b), and the network (3) in the I/O station (10) of any claim 1-9, the method comprising:
sending (S1) a first payload from the I/O module (12) to the network (3) including encapsulating (S1a) the payload in the I/O module and de-encapsulating (S1b) the payload in the network interface (11); and
sending (S2) a second payload from the network (3) to the I/O module (12) including encapsulating (S2a) the payload in the network interface (11) and de-encapsulating (S2b) the payload in the I/O module.

12. A computer program product (32) comprising computer-executable components (33) for causing an I/O station (10) to perform the method of claim 11 when the computer-executable components are run on processing circuitry (31) comprised in the I/O station.
